# EUROPEAN PATENT APPLICATION

(11) **EP 4 672 433 A1**
(43) Date of publication of application: **31.12.2025**
(21) Application number: 24809929.3
(22) Date of filing: 16.01.2024
(51) Int. Cl.: H01M 10/6555, H01M 10/617, H01M 10/647

(54) **BATTERY AND ELECTRICAL DEVICE**

(30) Priority: 25.05.2023 CN 202310599009
(71) Applicant: Contemporary Amperex Technology Co., Limited, Ningde, Fujian 352100 (CN)
(72) Inventor: WANG, Shaoshan, Ningde, Fujian 352100 (CN); HE, Jianfu, Ningde, Fujian 352100 (CN); YE, Yonghuang, Ningde, Fujian 352100 (CN)
(74) Representative: Ran, Handong
(86) International application number: PCT/CN2024/072485
(87) International publication number: WO 2024/239678

(57) **Abstract**

The present application relates to the technical field of batteries. Provided are a battery and an electrical device. The battery comprises at least one column of battery cell units arranged in columns and support members provided in respective battery cell units; amongst the battery cell units in the current column, the heat conductivity of the support member in the battery cell unit at the central position is greater than the heat conductivities of the support members in the battery cell units at outer positions. In the battery provided in the present application, the heat conductivities of the respective support members in the current column are decreasing from the central position to the edge positions, such that the efficiency of transferring heat outwards of the battery cell unit at the central position is higher than that of the battery cell units at the outer positions, resulting in a more uniform working temperature of the battery cells in the current column. When the battery consists of a plurality of columns of battery cells, the heat in the middle of the battery can be transferred to the edge more quickly, such that the working temperature of the middle area of the battery is the same or basically the same as the working temperature of the edge area, thus achieving a more uniform overall working temperature of batteries.

## Description

The present application claims the priority of Chinese Patent Application No. 202310599009.8, filed with the China National Intellectual Property Administration on May 25, 2023, entitled "BATTERY AND ELECTRICAL DEVICE", the entire content of which is incorporated herein by reference.

### TECHNICAL FIELD

The present application relates to the field of battery technologies, and in particular, to a battery and an electrical device.

### BACKGROUND

A battery module includes a plurality of battery cells and a water cooling apparatus provided at the bottom of each battery cell. Each battery cell is arranged in a direction such that the battery module finally has a square structure or a regular hexagonal structure, and the water cooling apparatus cools each battery cell.

However, due to the difference in the arrangement positions of the battery cells, a working temperature of each battery cell in a middle region is higher than a working temperature of each battery cell in an edge region, causing an overall working temperature distribution of the battery module to be non-uniform over time.

### TECHNICAL PROBLEM

An objective of embodiments of the present application is to provide a battery and an electrical device, to resolve the problem of a non-uniform overall working temperature distribution of an existing battery.

### TECHNICAL SOLUTION

In order to achieve the above objective, the embodiments of the present application adopt the technical solutions below:

According to a first aspect, an embodiment of the present application provides a battery, including a plurality of battery cells arranged in at least one column and a support member provided in each battery cell, where among the battery cells in the current column, a thermal conductivity of the support member in the battery cell at a middle position is greater than a thermal conductivity of the support member in the battery cell at an outer position.

Beneficial effects of the embodiments of the present application are as follows: in the battery provided in the present application, the support members are provided in at least one column of battery cells, and the thermal conductivities of the support members are set differently based on positions of the current battery cells. Specifically, the thermal conductivity of the support member at the middle position is greater than the thermal conductivity of the support member at the outer position. As such, the thermal conductivities of the support members in the current column present a progressively decreasing trend in a direction from a middle position to an edge position, such that the efficiency of heat transfer to the outside of the battery cell at the middle position is higher than that of the battery cell at the outer position, and working temperatures of the battery cells in the current column are more uniform. When the battery includes a plurality of columns of battery cells, heat can be transferred from the middle to the edge of the battery more quickly, such that a working temperature of a middle region of the battery is the same or substantially the same as a working temperature of an edge region, thereby achieving a more uniform overall working temperature of the battery.

In an embodiment, the battery cell includes a housing and a plurality of electrode assemblies provided in the housing, and the support member is provided between two adjacent electrode assemblies; and/or the support member is provided between the electrode assembly and an inner wall of the housing.

With the above technical solution, the position of the support member provided in the battery cell is defined, and the heat conduction efficiency varies.

In an embodiment, each electrode assembly is arranged in an expansion direction thereof, and the support member is provided between any two adjacent electrode assemblies; and/or the support member is provided between the electrode assembly and the inner wall of the housing corresponding to the expansion direction of the electrode assembly.

With the above technical solution, the support member and the electrode assembly are connected more closely, which is more conducive to heat conduction.

In an embodiment, the support member includes a first body portion provided between large-surface end faces of the two adjacent electrode assemblies;

alternatively, the support member includes a first body portion provided between the large-surface end face of the electrode assembly and the inner wall of the housing.

With the above technical solution, the contact area between the first body portion of the support member and the electrode assembly is larger, which is more conducive to heat conduction.

In an embodiment, the support member further includes a first extension portion formed by one end of the first body portion extending outward, the first extension portion being used for contact with a top end portion of the electrode assembly.

With the above technical solution, the first extension portion is used to realize heat conduction at the top end portion of the electrode assembly.

In an embodiment, the support member further includes a second extension portion formed by another end of the first body portion extending outward, the second extension portion being used for contact with a bottom end portion of the electrode assembly.

With the above technical solution, the second extension portion is used to realize heat conduction at the bottom end portion of the electrode assembly.

In an embodiment, among the battery cells in the current column, in a direction from the battery cell at the middle position to the battery cell at the outer position, the thermal conductivities of the support members in the battery cells present a linear progressive decrease.

With the above technical solution, heat generated by working is conducted from the battery cell at the middle position to the battery cell at the outer position in a gradient manner.

In an embodiment, among the battery cells in the current column, in a direction from the battery cell at the middle position to the battery cell at the outer position, the thermal conductivities of the support members in the battery cells present a nonlinear progressive decrease.

With the above technical solution, heat generated by working is conducted from the battery cell at the middle position to the battery cell at the outer position in a gradient manner.

In an embodiment, among the battery cells in the current column, the ratio of the thermal conductivity of the support member in the battery cell at the middle position to the thermal conductivity of the support member in the battery cell at an outermost position is greater than or equal to 2.

In an embodiment, the support member is elastic.

With the above technical solution, the support member is used to restrain the battery cell from expanding.

In an embodiment, the support members are of the same material, and among the battery cells in the current column, a thickness of the support member in the battery cell at the middle position is less than a thickness of the support member in the battery cell at the outer position.

With the above technical solution, the magnitude of the thermal conductivity of the support member is adjusted by changing the thickness of the support member, where the larger the thickness of the support member, the smaller the thermal conductivity.

In an embodiment, the support members are of the same material, and among the battery cells in the current column, a contact area of the support member in the battery cell at the middle position is greater than a contact area of the support member in the battery cell at the outer position.

With the above technical solution, the magnitude of the thermal conductivity of the support member is adjusted by changing the contact area between the support member and the battery cell, where the larger the contact area between the support member and the battery cell, the larger the thermal conductivity.

In an embodiment, the support members are of the same material, and among the battery cells in the current column, a porosity of the support member in the battery cell at the middle position is greater than a porosity of the support member in the battery cell at the outer position.

With the above technical solution, the magnitude of the thermal conductivity of the support member is adjusted by changing the porosity of the support member, where the larger the porosity, the larger the thermal conductivity.

In an embodiment, under the condition of the same porosity, in the direction from the battery cell at the middle position to the battery cell at the outer position, pore diameters of the support members in the battery cells present a progressively decreasing trend.

With the above technical solution, under the condition of the same porosity, the larger the pore diameter of the support member, the larger the thermal conductivity.

In an embodiment, the battery further includes a liquid cooling plate, where a bottom end portion of each battery cell is placed on the liquid cooling plate.

With the above technical solution, the liquid cooling plate is used to further dissipate heat from each battery cell.

According to a second aspect, an embodiment of the present application further provides an electrical device, including the foregoing battery.

Beneficial effects of the battery provided in the embodiments of the present application are as follows: in the battery provided in the present application, the support members are provided in the battery cells of at least one column, and the thermal conductivities of the support members are set differently based on the current positions of the battery cells. Specifically, the thermal conductivity of the support member at the middle position is greater than the thermal conductivity of the support member at the outer position. As such, the thermal conductivities of the support members in the current column present a progressively decreasing trend in a direction from the middle position to an edge position, such that the efficiency of heat transfer to the outside of the battery cell at the middle position is higher than that of the battery cell at the outer position, and working temperatures of the battery cells in the current column are more uniform. When the battery includes a plurality of columns of battery cells, heat can be transferred from the middle to the edge of the battery more quickly, such that a working temperature of a middle region of the battery is the same or substantially the same as a working temperature of an edge region, thereby achieving a more uniform overall working temperature of the battery.

The beneficial effects of the electrical device provided in the embodiments of the present application are as follows: in the electrical device provided in the present application, based on the provision of the battery, a working process of the electrical device is more stable.

### DESCRIPTION OF DRAWINGS

To describe technical solutions in embodiments of the present application more clearly, the following briefly describes the accompanying drawings for describing the embodiments or the prior art. It is clear that the accompanying drawings described in the following are merely some embodiments of the present application. Those skilled in the art can still derive other figures from the these figures without creative efforts.
FIG. 1 is a schematic structural diagram of an electrical device according to some embodiments of the present application;
FIG. 2 is an exploded view of a battery according to some embodiments of the present application;
FIG. 3 is an exploded view of a battery in another angle according to some embodiments of the present application;
FIG. 4 is a sectional view of a battery cell of a battery according to some embodiments of the present application;
FIG. 5 is a schematic structural diagram of a battery cell of a battery with a housing removed according to some embodiments of the present application;
FIG. 6 is a sectional view of arranged battery cells of a battery according to a first embodiment of the present application;
FIG. 7 is a sectional view of arranged battery cells of a battery according to a second embodiment of the present application; and
FIG. 8 is a sectional view of arranged battery cells of a battery according to a third embodiment of the present application.

In which, reference signs in the figures:
1000 - electrical device;
100 - battery; 200 - controller; 300 - motor;
10 - battery cell; 11 - housing; 12 - electrode assembly;
20 - support member; 21 - first body portion; 22 - first extension portion; 23 - second extension portion;
30 - liquid cooling plate;
40 - casing;

### DESCRIPTION OF THE EMBODIMENTS

The embodiments of the present application will be described in detail below. The examples of the embodiments are shown in the accompanying drawings, in which the same or similar reference numerals denote the same or similar elements or elements with the same or similar functions throughout. The embodiments described below with reference to the drawings are exemplary and are intended to explain the present application, and should not be construed as limiting the present application.

In the description of the present application, it should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In addition, the terms "first" and "second" are only used for descriptive purposes, and should not be construed as indicating or implying relative importance or implicitly indicating the number of technical features indicated. Thus, a feature defined by "first" and "second" may explicitly or implicitly indicates that the feature is singular or plural. In the description of the present application, the meaning of "a plurality of" is two or more, unless otherwise specifically defined.

In the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person skilled in the art can understand specific meanings of these terms in the present application according to specific situations.

At present, in view of the development of the market, the use of power batteries is becoming increasingly more widespread. Power batteries are used not only in energy storage power systems such as hydropower, thermal power, wind power, and solar power plants, but also in electric transportation tools such as electric bicycles, electric motorcycles, and electric vehicles, as well as military equipment, aerospace, and many other fields. As an application field of power batteries continues to expand, a market demand for power batteries continues to increase.

In some cases, a battery includes a plurality of battery cells. According to actual use demands, the battery cells are laid in an array, for example, there are one hundred battery cells, which are laid in ten columns arranged horizontally and ten rows arranged vertically, etc. Accordingly, several battery cells are inevitably surrounded in a middle region. The battery cells in the middle region each undergo a large temperature rise and low heat dissipation, while the battery cells in a peripheral region each undergo a small temperature rise and fast heat dissipation, particularly the outermost battery cells in contact with a battery housing. As such, a working temperature of the middle region of the entire battery is higher than a working temperature of the peripheral region, that is, an overall working temperature distribution of the battery is non-uniform. As the use time increases, the charge and discharge performance and safety of the battery are inevitably affected.

In view of above, the problem of non-uniform overall working temperature distribution of the battery is to be solved. The present application provides a battery, where a support member is provided in a battery cell, and a thermal conductivity of the support member is related to the position of the battery cell in which the support member is located. Specifically, the thermal conductivity of the support member in the battery cell at a middle position is greater than the thermal conductivity of the support member in the battery cell at an outer position. As such, the heat dissipation efficiency of the battery cell in the middle region is higher than the heat dissipation efficiency of the battery cell in the peripheral region, and heat can be conducted from the middle region of the battery to the peripheral region quickly, thereby effectively improving the uniformity of the overall working temperature of the battery.

The battery disclosed in the embodiments of the present application may be used as a power source to be applied to an electrical device or various energy storage systems. The electrical device may be, but is not limited to, a mobile phone, a tablet computer, a notebook computer, an electric toy, an electric tool, an electric motorcycle, an electric automobile, a ship, a spacecraft, etc The electric toy may include a stationary or mobile electric toy, such as a game machine, an electric car toy, an electric ship toy, and an electric airplane toy. The spacecraft may include an airplane, a rocket, a space shuttle, a spaceship, etc.

For ease of description, the following embodiments are described with an example in which an electrical device 1000 in an embodiment of the present application is a vehicle.

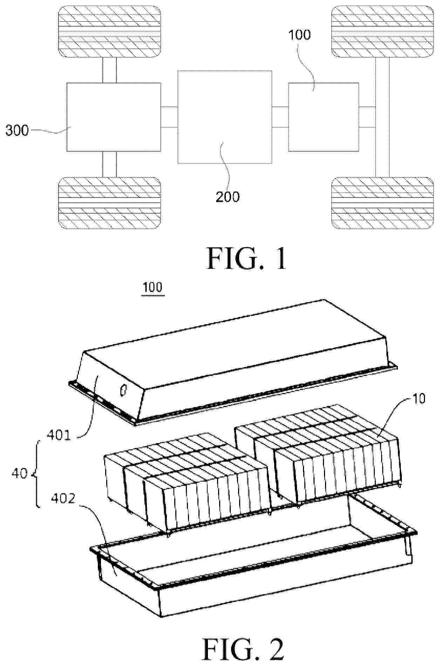

Referring to FIG. 1, FIG. 1 is a schematic structural diagram of a vehicle according to some embodiments of the present application. The vehicle may be a fuel vehicle, a gas vehicle, or a new energy vehicle, and the new energy vehicle may be a battery electric vehicle, a hybrid vehicle, or a range-extended electric vehicle. A battery 100 is provided inside the vehicle, and the battery 100 may be provided at the bottom, head, or tail of the vehicle. The battery 100 may be used to power the vehicle, for example, the battery 100 may be used as an operating power source of the vehicle. The vehicle may further include a controller 200 and a motor 300, where the controller 200 is used to control the battery 100 to power the motor 300, for example, for a working power demand of the vehicle during starting, navigating, and driving.

In some embodiments of the present application, the battery 100 may be used not only as an operating power source of the vehicle, but also as a driving power source of the vehicle, to provide driving power for the vehicle in replacement of or partially in replacement of fuel or natural gas.

Referring to FIG. 2, FIG. 2 is an exploded view of a battery 100 according to some embodiments of the present application. The battery 100 includes a casing 40 and a battery cell 10, where the battery cell 10 is accommodated in the casing 40. The casing 40 is used to provide an accommodation space for the battery cell 10. The casing 40 may include a casing body 402 and a sealing plate 401, where the casing body 402 and the sealing plate 401 snap-fit with each other to form an accommodating space for accommodating the battery cell 10 and an electric member. The casing body 402 may be of a hollow structure with an opening at an end, the sealing plate 401 may be of a plate-shaped structure, and the sealing plate 401 covers an opening side of the casing body 402, to define the accommodating space. Here, the casing 40 may be of various shapes such as a cylinder or a cuboid.

In the battery 100, there may be a plurality of battery cells 10, and the plurality of battery cells 10 may be in series connection, parallel connection, or series-parallel connection. The series-parallel connection means that the plurality of battery cells 10 are in both series and parallel connections. The plurality of battery cells 10 may directly be in series connection, parallel connection, or series-parallel connection, and then an integral body formed by the plurality of battery cells 10 is accommodated in the casing 40. Certainly, the battery 100 may be alternatively a battery 100 module formed by integrating the plurality of battery cells 10 in series connection, parallel connection, or series-parallel connection, and then a plurality of battery 100 modules are integrated by series connection, parallel connection, or series-parallel connection and accommodated in the casing 40. The battery 100 may further include other structures. For example, the battery 100 may further include a busbar component used for implementing electrical connection between the plurality of battery cells 10.

Here, each battery cell 10 may be a secondary battery 100 or a primary battery 100, or may be a lithium-sulfur battery 100, a sodium-ion battery 100, or a magnesium-ion battery 100, but is not limited thereto. The battery cell 10 may be in the shape of a cylinder, a flat body, a cuboid, or the like.

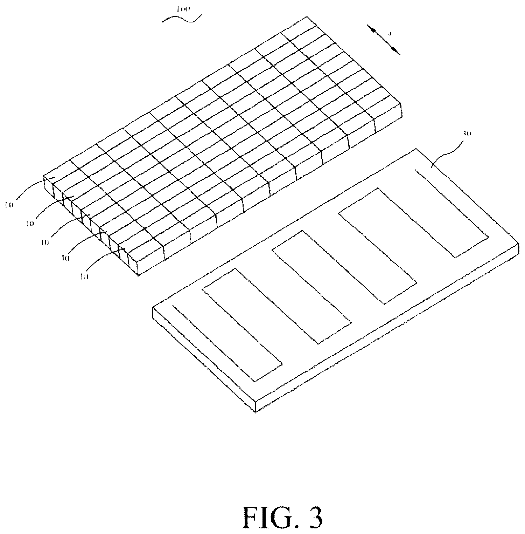

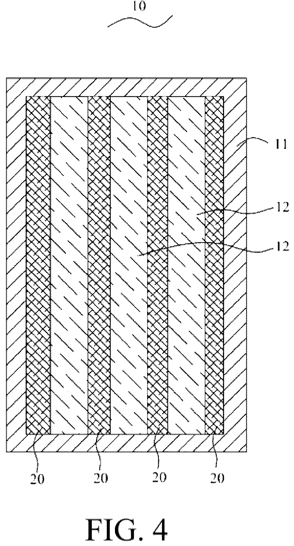

According to some embodiments of the present application, referring to FIG. 3 and FIG. 4, an embodiment of the present application provides a battery 100 including a plurality of battery cells 10 arranged in at least one column and a support member 20 provided in each battery cell 10, where among the battery cells 10 in the current column, a thermal conductivity of the support member 20 in the battery cell 10 at a middle position is greater than a thermal conductivity of the support member 20 in the battery cell 10 at an outer position.

The battery 100 should include a plurality of battery cells 10 distributed in an array. For example, the battery 100 includes a plurality of battery cells 10 arranged horizontally and a plurality of battery cells 10 arranged vertically, or a plurality of columns of battery cells 10 arranged radially outward from the center. An arrow direction in FIG. 3 is a column direction a of each battery cell 10, and a direction perpendicular to the column direction a is a row direction. Therefore, among the battery cells 10 in the columns, at least one column of battery cells 10 each are provided with the support member 20. For example, the battery 100 includes ten columns of battery cells 10 arranged horizontally and ten rows of battery cells 10 arranged vertically, where the battery cells 10 in one column each may be provided with the support member 20, the battery cells 10 in three columns each may be provided with the support member 20, or the battery cells 10 in each column each may be provided with the support member 20.

The support member 20 being provided in the battery cell 10 means that the support member 20 may be provided at any position in the battery cell 10, as long as the support member 20 is located inside the battery cell 10.

For example, the battery 100 cell includes a plurality of stacked electrode sheets and a battery 100 housing, and the support member 20 may be provided between two adjacent electrode sheets, between the electrode sheet and the battery 100 housing, or the like.

In the battery cells 10 in one column, the battery cell 10 at the middle position refers to the battery cell 10 other than first and last battery cells. For example, when there are three battery cells 10 in the current column, the battery cell 10 arranged at a second position is the battery cell 10 at the middle position. Alternatively, when there are four battery cells 10 in the current column, the battery cells 10 arranged at second and third positions may be referred to as the battery cells 10 at the middle position, and so on. There may be one or more battery cells 10 at the middle position. The outer position is a positional concept opposite to the middle position. That is, when the battery cell 10 at the middle position is determined in the current column, the battery cell 10 at one or more positions in front of the middle position is the battery cell 10 at the outer position, and the battery cell 10 at one or more positions at the rear of the middle position is also the battery cell 10 at the outer position. Similarly, there may be one or more battery cells 10 at the outer position.

The thermal conductivities of the support members 20 in the battery cells 10 at different positions are set differently. The different settings of the thermal conductivities of the support members 20 may be achieved from the aspect such as materials or shape structures. For example, the support member 20 in the battery cell 10 at the middle position is made of a material with better heat conduction, and the material may be polyethylene, polypropylene, polyurethane, silicone rubber, melamine, and the like. For another example, when the support members 20 are made of the same material, the different settings of the thermal conductivities of the support members may be achieved by adjusting thicknesses, areas, porosities, etc. of the support members 20.

For example, in the current column, the support members 20 are made of the same material, the thickness of the support member 20 in the battery cell 10 at the middle position is smaller, and the thickness of the support member 20 in the battery cell 10 at the outer position is larger. Here, the smaller the thickness of the support member 20, the higher the thermal conductivity, and therefore, the heat dissipation efficiency of the battery cell 10 at the middle position is higher.

For example, in the current column, the support members 20 are made of the same material, a contact area of the support member 20 in the battery cell 10 at the middle position is larger, and a contact area of the support member 20 in the battery cell 10 at the outer position is smaller. Here, the larger the contact area of the support member 20, the higher the thermal conductivity, and therefore, the heat dissipation efficiency of the battery cell 10 at the middle position is higher.

In the battery 100 provided in the present application, the support members 20 are provided in the battery cells 10 of at least one column, and the thermal conductivities of the support members 20 are set differently based on the current positions of the battery cells 10. Specifically, the thermal conductivity of the support member 20 at the middle position is greater than the thermal conductivity of the support member 20 at the outer position. As such, the thermal conductivities of the support members 20 in the current column present a progressively decreasing trend in a direction from the middle position to an edge position, such that the efficiency of heat transfer to the outside of the battery cell 10 at the middle position is higher than that of the battery cell 10 at the outer position, and working temperatures of the battery 100 cells in the current column are more uniform. When the battery 100 includes a plurality of columns of battery 100 cells, heat can be transferred from the middle to the edge of the battery 100 more quickly, such that a working temperature of a middle region of the battery 100 is the same or substantially the same as a working temperature of an edge region, thereby achieving a more uniform overall working temperature of the battery 100.

Referring to FIG. 4, in an embodiment, the battery cell 10 includes a housing 11 and a plurality of electrode assemblies 12 provided in the housing 11, and the support member 20 is provided between two adjacent electrode assemblies 12; and/or the support member 20 is provided between the electrode assembly 12 and an inner wall of the housing 11.

Here, the several electrode assemblies 12 refer to one, two, three, etc. electrode assemblies, and an upper limit of the number of the electrode assemblies may be adjusted based on a volume of the housing 11. The housing 11 is a metal member, and optionally, the housing 11 includes an aluminum alloy housing 11. The aluminum alloy housing 11 has a light weight, high strength, and good heat conduction. The electrode assembly 12 includes stacked electrode sheets. Based on different manufacturing processes, the electrode assembly 12 may be formed by winding the electrode sheets with continuous lengths, or the electrode assembly 12 may be formed by stacking the separate electrode sheets. Therefore, when a plurality of electrode assemblies 12 are provided in the housing 11, an arrangement of the electrode assemblies 12 includes an arrangement in a stacking direction of the electrode sheets, an arrangement in a direction perpendicular to the stacking direction of the electrode sheets, or an arrangement in both the stacking direction of the electrode sheets and the direction perpendicular to the stacking direction of the electrode sheets. After the electrode assemblies 12 are arranged, the housing 11 accommodates and limits the electrode assemblies 12.

In this way, according to the actual number of the electrode assemblies 12 in the housing 11 and the requirement of heat conduction, the support member 20 may be provided between any two adjacent electrode assemblies 12; the support member 20 may be provided between some adjacent electrode assemblies 12; or the support member 20 may be provided between all the adjacent electrode assemblies 12. For the electrode assembly 12 located at the periphery and close to the housing 11, the support member 20 may also be provided between the electrode assembly 12 and the housing 11.

Here, the shape structure of the support member 20 includes, but is not limited to, a sheet structure, a block structure, a strip structure, a porous structure, etc.

For example, when there is one electrode assembly 12, the support member 20 is provided between the electrode assembly 12 and the housing 11, and the shape structure of the support member 20 is adaptively adjusted based on the shape structure of the electrode assembly 12. If the electrode assembly 12 is of a cubic structure, the support member 20 may be of a sheet structure or a block structure and located on a peripheral side wall of the electrode assembly 12. Alternatively, if the electrode assembly 12 is of a cylindrical shape, the support member 20 may be of an arc sheet structure or a strip structure, and also located on the peripheral side wall of the electrode assembly 12.

For example, when there are two or more electrode assemblies 12, the support member 20 may be provided only between the electrode assemblies 12; the support member 20 may be provided only between the electrode assembly 12 and the housing 11; or the support member 20 may be provided between the electrode assemblies 12 and between the electrode assembly 12 and the housing 11. In particular, when there are many electrode assemblies 12, the support member 20 may be provided between every two adjacent electrode assemblies 12.

The electrode assembly 12 is a main heat generating part in the battery cell 10. By adding the support member 20 between the electrode assemblies 12 or adding the support member 20 between the electrode assembly 12 and the housing 11, working-generated heat can be conducted from a middle region of the electrode assembly 12 to the housing 11 more quickly, and then conducted from the housing 11 to the outside for heat dissipation.

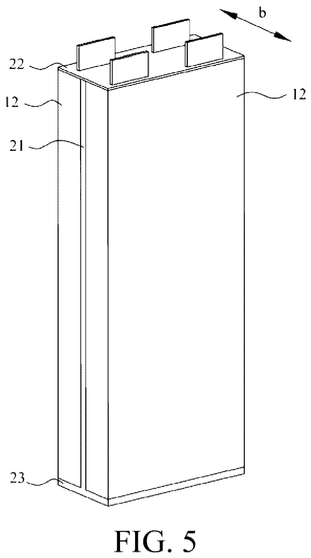

Referring to FIG. 4 and FIG. 5, in an embodiment, each electrode assembly 12 is arranged in an expansion direction thereof, and the support member 20 is provided between any two adjacent electrode assemblies 12; and/or the support member 20 is provided between the electrode assembly 12 and the inner wall of the housing 11 corresponding to the expansion direction of the electrode assembly 12.

It may be understood that an arrow direction in the figure is the expansion direction b of each electrode assembly 12. During an electrolytic reaction with an electrolyte, the electrode assembly 12 may expand in the stacking direction of the electrode sheets thereof, that is, the expansion direction of the electrode assembly 12 here is the stacking direction of the electrode sheets thereof. For example, when the electrode assembly 12 is formed by winding the electrode sheets with continuous lengths, the expansion direction of the electrode assembly 12 is a radial direction from a winding center to the outside of the electrode assembly. Alternatively, when the electrode assembly 12 is formed by stacking the separate electrode sheets, the expansion direction of the electrode assembly 12 is a thickness direction of the stacked electrode sheets.

For example, when there is one electrode assembly 12, the support member 20 is provided between the electrode assembly 12 and the housing 11 in the expansion direction of the electrode assembly 12, and the shape structure of the support member 20 is adaptively adjusted based on the shape structure of the electrode assembly 12. If the electrode assembly 12 is of a cubic structure, the support member 20 may be of a sheet structure or a block structure and located on a peripheral side wall of the electrode assembly 12. Alternatively, if the electrode assembly 12 is of a cylindrical shape, the support member 20 may be of an arc sheet structure or a strip structure, and also located on the peripheral side wall of the electrode assembly 12.

For example, when there are two or more electrode assemblies 12, similarly, in the expansion direction of the electrode assembly, the support member 20 may be provided only between the electrode assemblies 12; the support member 20 may be provided only between the electrode assembly 12 and the housing 11; or the support member 20 may be provided between the electrode assemblies 12 and between the electrode assembly 12 and the housing 11. In particular, when there are many electrode assemblies 12, the support member 20 may be provided between every two adjacent electrode assemblies 12.

The expansion direction of the electrode assembly 12 is a main direction of heat conduction to the outside, and each support member 20 is also provided in the expansion direction of the electrode assembly 12, such that the support member 20 and the electrode assembly 12 abut on each other more closely, resulting in a larger contact area between them, which is more conducive to heat conduction.

In other embodiments, when the electrode assemblies 12 form one or more columns in the expansion direction thereof, the thermal conductivities of the support members 20 provided between every two adjacent electrode assemblies 12 are set differently, that is, the thermal conductivity of the support member 20 away from the housing 11 is greater than the thermal conductivity of the support member 20 close to the housing 11.

Here, when the electrode assemblies 12 are provided in the housing 11 in one or more columns in the expansion direction thereof, there thus is an electrode assembly 12 far away from the housing 11, and the electrode assembly 12 is located in the middle position of the current column. Similarly, the electrode assembly 12 closer to the housing 11 than the electrode assembly is an electrode assembly 12 close to the housing 11. The spatial positions of the two electrode assemblies are relative to each other. Meanwhile, there may be one or more support members 20 far away from the housing 11, and there may also be one or more support members 20 close to the housing 11.

For example, if four electrode assemblies 12 are provided in one column in the expansion direction thereof, the support member 20 between the electrode assembly 12 at a second position and the electrode assembly 12 at a third position is defined as the support member 20 far away from the housing 11; the support member 20 between the electrode assembly 12 at a first position and the electrode assembly 12 at the second position, and the support member 20 between the electrode assembly 12 at the third position and the electrode assembly 12 at a fourth position are defined as the support members 20 close to the housing 11.

The different settings of the thermal conductivities of the support members 20 in the current column may be achieved from the aspect such as materials or shape structures. For example, the support member 20 far away from the housing 11 is made of a material with better heat conduction, and the material may be polyethylene, polypropylene, polyurethane, silicone rubber, melamine, and the like. For another example, when the support members 20 are made of the same material, the different settings of the thermal conductivities of the support members may be achieved by adjusting thicknesses, areas, porosities, etc. of the support members 20.

In this way, in the current column, working-generated heat can be conducted from the electrode assembly 12 far away from the housing 11 to the housing 11 relatively quickly, and then conducted from the housing 11 to the outside, thereby greatly improving the heat dissipation efficiency of a single battery cell 10.

Referring to FIG. 5, in an embodiment, the support member 20 includes a first body portion 21 provided between large-surface end faces of the two adjacent electrode assemblies 12;
alternatively, the support member 20 includes a first body portion 21 provided between the large-surface end face of the electrode assembly 12 and the inner wall of the housing 11.

It may be understood that the large-surface end face of the electrode assembly 12 is a largest cross section of the electrode assembly 12, and the large-surface end face is perpendicular to the expansion direction of the electrode assembly 12. Meanwhile, based on the number of the electrode assemblies 12 in the housing 11, the first body portion 21 may be located between the large-surface end faces of two adjacent electrode assemblies 12, or between the large-surface end face of the electrode assembly 12 and the inner wall of the housing 11.

Here, the shape of the first body portion 21 includes, but is not limited to, a sheet structure, a block structure, a strip structure, a porous structure, etc.

The large-surface end face of the electrode assembly 12 is a main heat conduction end face of the electrode assembly 12, and is also an end face thereof that expands. As such, providing the first body portion 21 on the end face is more conducive to heat conduction to the outside, thereby improving the heat dissipation efficiency thereof.

Referring to FIG. 5, in an embodiment, the support member 20 further includes a first extension portion 22 formed by one end of the first body portion 21 extending outward, the first extension portion 22 being used for contact with a top end portion of the electrode assembly 12.

It may be understood that the first extension portion 22 and the first body portion 21 may be integrally formed, or may be connected by means of welding, inserting, snap-fit, or the like. Therefore, the first extension portion 22 and the first body portion 21 may be made of the same material, or may be made of different materials. The shape of the first extension portion 22 includes, but is not limited to, a sheet structure, a block structure, a strip structure, a porous structure, etc. As such, a thermal conductivity of the first extension portion 22 may be the same as a thermal conductivity of the first body portion 21 or may be different from the thermal conductivity of the first body portion 21.

Here, the top end portion of the electrode assembly 12 is related to the large-surface end face of the electrode assembly 12. When the electrode assembly 12 is in an upright state and the large-surface end face is perpendicular to a placement platform, the top end portion of the electrode assembly 12 is far away from an end portion of the placement platform. As such, the first extension portion 22 is used to conduct heat from the top end portion of the electrode assembly 12 to the housing 11, and then the heat is conducted from the housing 11 to the outside.

Optionally, the thermal conductivity of the first extension portion 22 is less than the thermal conductivity of the first body portion 21, which is conducive to heat conduction from the first body portion 21 to the first extension portion 22.

Referring to FIG. 5, in an embodiment, the support member 20 further includes a second extension portion 23 formed by another end of the first body portion 21 extending outward, the second extension portion 23 being used for contact with a bottom end portion of the electrode assembly 12.

It may be understood that the second extension portion 23 and the first body portion 21 may be integrally formed, or may be connected by means of welding, inserting, snap-fit, or the like. Therefore, the second extension portion 23 and the first body portion 21 may be made of the same material, or may be made of different materials. The shape of the second extension portion 23 includes, but is not limited to, a sheet structure, a block structure, a strip structure, a porous structure, etc. As such, a thermal conductivity of the second extension portion 23 may be the same as the thermal conductivity of the first body portion 21 or may be different from the thermal conductivity of the first body portion 21.

Here, the bottom end portion of the electrode assembly 12 is related to the large-surface end face of the electrode assembly 12. When the electrode assembly 12 is in an upright state and the large-surface end face is perpendicular to a placement platform, the bottom end portion of the electrode assembly 12 is close to an end portion of the placement platform. As such, the second extension portion 23 is used to conduct heat from the bottom end portion of the electrode assembly 12 to the housing 11, and then the heat is conducted from the housing 11 to the outside.

Optionally, the thermal conductivity of the second extension portion 23 is less than the thermal conductivity of the first body portion, which is conducive to heat conduction from the first body portion 21 to the second extension portion 23.

In an embodiment, among the battery cells 10 in the current column, in a direction from the battery cell 10 at the middle position to the battery cell 10 at the outer position, the thermal conductivities of the support members 20 in the battery cells 10 present a linear progressive decrease.

It may be understood that the thermal conductivities presenting the linear progressive decrease means that a difference between the thermal conductivities of the support members 20 is a fixed value, and the thermal conductivities of the support members 20 present a progressively decreasing trend in the direction from the battery cell 10 at the middle position to the battery cell 10 at the outer position.

As such, the thermal conductivities of the support members 20 in the battery cells 10 in the current column vary less, which is suitable for the battery 100 with a relatively large number of battery cells 10.

For example, there are nine battery cells 10 in the current column, where the battery cell 10 at a fifth position is taken as the battery cell 10 at the middle position, and the other battery cells 10 are taken as the battery cells 10 at the outer position. As such, in the direction from the battery cell 10 at the middle position to the battery cell 10 at the outer position, the difference between the thermal conductivities of the support members 20 in the battery cells is always A.

In an embodiment, among the battery cells 10 in the current column, in a direction from the battery cell 10 at the middle position to the battery cell 10 at the outer position, the thermal conductivities of the support members 20 in the battery cells 10 present a nonlinear progressive decrease.

It may be understood that the thermal conductivities presenting the nonlinear progressive decrease means that a difference between the thermal conductivities of the support members 20 is variable, and the thermal conductivities of the support members 20 present a progressively decreasing trend in the direction from the battery cell 10 at the middle position to the battery cell 10 at the outer position.

As such, the thermal conductivities of the support members 20 in the battery cells 10 in the current column vary much, which is suitable for the battery 100 with a relatively small number of battery cells 10.

For example, there are nine battery cells 10 in the current column, where the battery cell 10 at a fifth position is taken as the battery cell 10 at the middle position, and the other battery cells 10 are taken as the battery cells 10 at the outer position. The thermal conductivities decrease nonlinearly. Accordingly, a difference between the thermal conductivities of the corresponding support members 20 in the battery cells 10 at fourth, fifth, and sixth positions is B, and the value of B may be approximate to zero; a difference between the thermal conductivities of the corresponding support members 20 in the battery cells 10 at seventh, eighth, and ninth positions is C, and the value of C may be approximate to zero; a difference between the thermal conductivities of the corresponding support members 20 in the battery cells 10 at third, second, and first positions is D, and the value of D may be approximate to zero. Moreover, the value of B is twice the value of C and twice the value of D. As such, in the current column of the battery 100, working temperatures of the three battery cells 10 (i.e., the battery cells 10 at the fourth, fifth, and sixth positions) in the middle region tend to be approximate to each other, and heat can be quickly conducted from this region to the battery cells 10 in an outer region.

Specifically, in a specific embodiment, among the battery cells 10 in the current column, the ratio of the thermal conductivity of the support member 20 in the battery cell 10 at the middle position to the thermal conductivity of the support member 20 in the battery cell 10 at an outermost position is greater than or equal to 2.

It may be understood that the battery cell 10 at the outermost position is the first or last battery cell 10 in the current column; and the battery cell 10 at the middle position may be one battery cell 10 or several battery cells 10 in the current column.

As such, when the ratio between the thermal conductivities of the support members 20 at the two positions is larger, heat can be conducted from the one or more battery cells 10 in the middle region of the current column to the peripheral region faster.

For example, in the current row, there are five battery cells 10, where the battery cell 10 at a third position is taken as the battery cell 10 at the middle position, and the battery cell 10 at a first or fifth position is taken as the battery cell 10 at the outermost position. That is, the ratio of the thermal conductivity of the support member 20 in the battery cell 10 at the third position to the thermal conductivity of the support member 20 in the battery cell 10 at the first or third position is greater than or equal to 2. Alternatively, it may also be understood that in the current row, there are five battery cells 10, where the battery cells 10 at second, third, and fourth positions are taken as the battery cells 10 at the middle position, and the battery cell 10 at a first or fifth position is taken as the battery cell 10 at the outermost position. Accordingly, the ratio of the thermal conductivity of the support member 20 in each of the three battery cells 10 in the middle region to the thermal conductivity of the support member 20 in the battery cell 10 at the first or fifth position is greater than or equal to 2. As such, in the current column of the battery 100, heat can be quickly conducted from the battery cells 10 in the middle region to the battery cell 10 in the outer region.

In an embodiment, the support member 20 is elastic.

It may be understood that the support member 20 may be made of an elastic material. For example, the material of the support member 20 includes, but is not limited to, polyethylene, polypropylene, polyurethane, silicone rubber, and melamine. Alternatively, the shape structure of the support member 20 makes it elastic. For example, the structure form of the support member 20 may be similar to a reed, a spring, a porous structure, etc.

During charge and discharge, the electrode assembly 12 in the battery cell 10 may expand. In particular, since the electrode assemblies 12 are arranged in the expansion direction thereof, an expansion action force of the electrode assemblies 12 on the housing 11 may be increased accumulatively. Thus, in order to restrain the expansion of the electrode assembly, the support member 20 is elastic, such that the support member 20 between two electrode assemblies 12 can offset a part or all of the expansion force and presents a compressed thickness state. Alternatively, the support member 20 between the electrode assembly 12 and the housing 11 can also reduce the probability of a breakage caused by excessive contact between the electrode assembly 12 and the housing 11, thereby effectively improving the safety of the electrode assembly 12 in the housing 11.

The following embodiments are illustrations of achieving different thermal conductivities of the support members 20, and mainly illustrate the different settings of the thermal conductivities of the support members 20 made of the same material achieved by adjusting a difference in the shape structure.

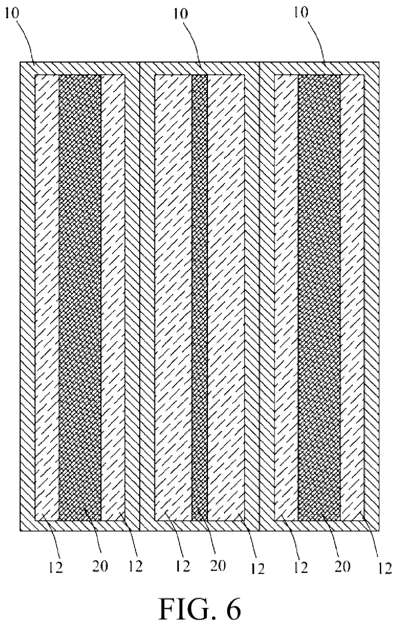

Referring to FIG. 6, in an embodiment, the support members 20 are of the same material, and among the battery cells 10 in the current column, a thickness of the support member 20 in the battery cell 10 at the middle position is less than a thickness of the support member 20 in the battery cell 10 at the outer position.

It may be understood that, in the case where the support members 20 are of the same material, the larger the thickness of the support member 20, the smaller the thermal conductivity thereof. As such, the thickness of the support member 20 at the middle position may be set to be minimum, and the thickness of each support member 20 gradually increases in the direction from the middle position to the outer position.

It should be noted that, in order to ensure the accuracy of the thermal conductivity of each support member 20, it is also required to control the thickness of the support member 20 to be the only variable. That is, on the premise that the support members 20 are of the same material, the contact areas thereof with the electrode assemblies 12 are the same, and only the thicknesses thereof are different.

For example, among the battery cells 10 in the current column, in the direction from the battery cell 10 at the middle position to the battery cell 10 at the outer position, the thicknesses of the support members 20 in the battery cells 10 present a nonlinear or linear progressive increase.

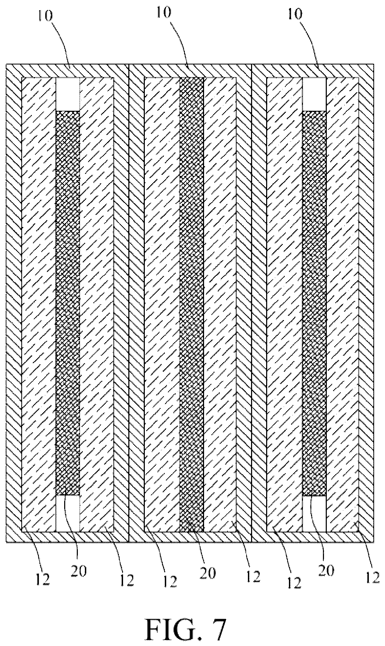

Referring to FIG. 7, in an embodiment, the support members 20 are of the same material, and among the battery cells 10 in the current column, a contact area of the support member 20 in the battery cell 10 at the middle position is greater than a contact area of the support member 20 in the battery cell 10 at the outer position.

It may be understood that the contact area of the support member 20 is an area in contact with the electrode assembly 12. In the case where the support members 20 are of the same material, the larger the contact area of the support member 20, the larger the thermal conductivity thereof. As such, the contact area of the support member 20 at the middle position may be set to be maximum, and the contact area of each support member 20 gradually decreases in the direction from the middle position to the outer position.

It should be noted that, in order to ensure the accuracy of the thermal conductivity of each support member 20, it is also required to control the contact area of the support member 20 to be the only variable. That is, on the premise that the support members 20 are of the same material, the thicknesses of the support members 20 are the same, and only the contact areas thereof are different.

For example, among the battery cells 10 in the current column, in the direction from the battery cell 10 at the middle position to the battery cell 10 at the outer position, the contact areas of the support members 20 in the battery cells 10 present a nonlinear or linear progressive decrease.

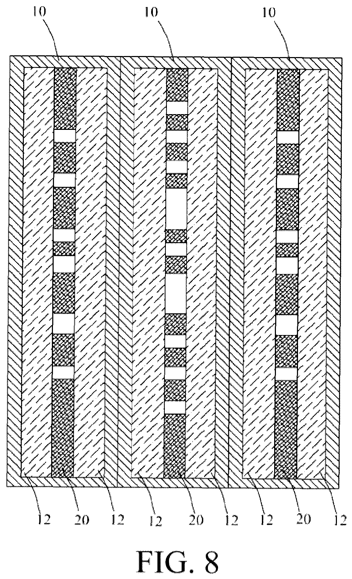

Referring to FIG. 8, in an embodiment, the support members 20 are of the same material, and among the battery cells 10 in the current column, a porosity of the support member 20 in the battery cell 10 at the middle position is greater than a porosity of the support member 20 in the battery cell 10 at the outer position.

It may be understood that the porosity refers to the percentage of a pore volume in the support member 20 based on a total volume of the support member 20 in a natural state. In the case where the support members 20 are of the same material, the larger the porosity of the support member 20, the larger the thermal conductivity thereof. As such, the porosity of the support member 20 at the middle position may be set to be maximum, and the porosity of each support member 20 gradually decreases in the direction from the middle position to the outer position.

It should be noted that, in order to ensure the accuracy of the thermal conductivity of each support member 20, it is also required to control the porosity of the support member 20 to be the only variable. That is, on the premise that the support members 20 are of the same material, the total volumes of the support members 20 in the natural state are the same, the thicknesses thereof are also the same, and only the porosities thereof are different.

For example, among the battery cells 10 in the current column, in the direction from the battery cell 10 at the middle position to the battery cell 10 at the outer position, the porosities of the support members 20 in the battery cells 10 present a nonlinear or linear progressive decrease.

In a specific embodiment, under the condition of the same porosity, in the direction from the battery cell 10 at the middle position to the battery cell 10 at the outer position, pore diameters of the support members 20 in the battery cells 10 present a progressively decreasing trend.

It may be understood that, under the condition of the same porosity, the larger the pore diameter, the larger the thermal conductivity of the support member 20.

It should be noted that, in order to ensure the accuracy of the thermal conductivity of each support member 20, it is also required to control the pore diameter of the support member 20 to be the only variable. That is, on the premise that the support members 20 are of the same material, the total volumes of the support members 20 in the natural state are the same, the thicknesses thereof are also the same, the porosities thereof are also the same, and only the pore diameters thereof are different.

For example, among the battery cells 10 in the current column, in the direction from the battery cell 10 at the middle position to the battery cell 10 at the outer position, the pore diameters of the support members 20 in the battery cells 10 present a nonlinear or linear progressive decrease.

Referring to FIG. 3, in an embodiment, the battery 100 further includes a liquid cooling plate 30, where a bottom end portion of each battery cell 10 is placed on the liquid cooling plate 30.

The liquid cooling plate 30 is a core component in a thermal management module of the battery 100, and can quickly transfer working-generated heat from each battery cell 10 to the outside. The liquid cooling plate 30 typically includes a plate body having an accommodating cavity and a coolant liquid circulating in the accommodating cavity. Specifically, working-generated heat may be conducted from each battery cell 10 to the plate body, then conducted from the plate body to the circulating coolant liquid, and finally conducted to a thermal management system.

The bottom end portion of the battery cell 10 is an end portion in contact with the liquid cooling plate 30.

Optionally, a top end portion is opposite to the bottom end portion of the battery cell 10, and the stacking direction of the electrode assemblies 12 in the battery cell 10 is the same as a direction from the bottom end portion to the top end portion, that is, the expansion direction of each electrode assembly 12 is the same as the direction from the bottom end portion to the top end portion. As such, the working-generated heat can be quickly transferred from the battery cell 10 to the liquid cooling plate 30.

With the above technical solution, the liquid cooling plate 30 is used to further dissipate heat from each battery cell 10.

For example, as shown in FIG. 3 to FIG. 8, the battery 100 includes a plurality of battery cells 10 arranged in ten columns and the support member 20 provided in each battery cell 10. Specifically, the battery cells 10 (a total of 24 battery cells 10) in third to the eighth columns and in fourth to seventh rows are used as the battery cells 10 at the middle position, and the two circles of battery cells 10 surrounding the battery cells 10 at the middle position are used as the battery cells 10 at the outer position. The thermal conductivity of the support member 20 in the battery cell 10 at the middle position is greater than the thermal conductivity of the support member 20 in the battery cell 10 at the outer position.

The thermal conductivities of the support members 20 in the battery cells 10 at different positions are set differently, which can be achieved from the aspect such as materials, or shape structures.

For example, the support members 20 are of the same material, and among the battery cells 10 in the current column, a thickness of the support member 20 in the battery cell 10 at the middle position is less than a thickness of the support member 20 in the battery cell 10 at the outer position. In the case where the support members 20 are of the same material, the larger the thickness of the support member 20, the smaller the thermal conductivity thereof. As such, the thickness of the support member 20 at the middle position may be set to be minimum, and the thickness of each support member 20 gradually increases in the direction from the middle position to the outer position.

For example, the support members 20 are of the same material, and among the battery cells 10 in the current column, a contact area of the support member 20 in the battery cell 10 at the middle position is greater than a contact area of the support member 20 in the battery cell 10 at the outer position. For example, the contact area of the support member 20 is an area in contact with the electrode assembly 12. In the case where the support members 20 are of the same material, the larger the contact area of the support member 20, the larger the thermal conductivity thereof. As such, the contact area of the support member 20 at the middle position may be set to be maximum, and the contact area of each support member 20 gradually decreases in the direction from the middle position to the outer position.

For example, the support members 20 are of the same material, and among the battery cells 10 in the current column, a porosity of the support member 20 in the battery cell 10 at the middle position is greater than a porosity of the support member 20 in the battery cell 10 at the outer position. The porosity refers to the percentage of a pore volume in the support member 20 based on a total volume of the support member 20 in a natural state. In the case where the support members 20 are of the same material, the larger the porosity of the support member 20, the larger the thermal conductivity thereof. As such, the porosity of the support member 20 at the middle position may be set to be maximum, and the porosity of each support member 20 gradually decreases in the direction from the middle position to the outer position. Optionally, under the condition of the same porosity, in the direction from the battery cell 10 at the middle position to the battery cell 10 at the outer position, pore diameters of the support members 20 in the battery cells 10 present a progressively decreasing trend. Under the condition of the same porosity, the larger the pore diameter, the larger the thermal conductivity of the support member 20.

The battery cell 10 includes a housing 11 and a plurality of electrode assemblies 12 provided in the housing 11, and the support member 20 is provided between two adjacent electrode assemblies 12; and/or the support member 20 is provided between the electrode assembly 12 and an inner wall of the housing 11. Optionally, each electrode assembly 12 is arranged in an expansion direction thereof, and the support member 20 is provided between any two adjacent electrode assemblies 12; and/or the support member 20 is provided between the electrode assembly 12 and the inner wall of the housing 11 corresponding to the expansion direction of the electrode assembly 12. The expansion direction of the electrode assembly 12 is a main direction of heat conduction to the outside, and each support member 20 is also provided in the expansion direction of the electrode assembly 12, such that the support member 20 and the electrode assembly 12 abut on each other more closely, resulting in a larger contact area between them, which is more conducive to heat conduction.

The support member 20 includes a first body portion 21 provided between large-surface end faces of two adjacent electrode assemblies 12; alternatively, the support member 20 includes a first body portion 21 provided between the large-surface end face of the electrode assembly 12 and the inner wall of the housing 11. The large-surface end face of the electrode assembly 12 is a main heat conduction end face of the electrode assembly 12, and is also an end face thereof that expands. As such, providing the first body portion 21 on the end face is more conducive to heat conduction to the outside, thereby improving the heat dissipation efficiency thereof.

The support member 20 further includes a first extension portion 22 formed by one end of the first body portion 21 extending outward, the first extension portion 22 being used for contact with a top end portion of the electrode assembly 12. The top end portion of the electrode assembly 12 is related to the large-surface end face of the electrode assembly 12. When the electrode assembly 12 is in an upright state and the large-surface end face is perpendicular to a placement platform, the top end portion of the electrode assembly 12 is far away from an end portion of the placement platform. As such, the first extension portion 22 is used to conduct heat from the top end portion of the electrode assembly 12 to the housing 11, and then the heat is conducted from the housing 11 to the outside.

The support member 20 further includes a second extension portion 23 formed by another end of the first body portion 21 extending outward, the second extension portion 23 being used for contact with a bottom end portion of the electrode assembly 12. The bottom end portion of the electrode assembly 12 is related to the large-surface end face of the electrode assembly 12. When the electrode assembly 12 is in an upright state and the large-surface end face is perpendicular to a placement platform, the bottom end portion of the electrode assembly 12 is close to an end portion of the placement platform. As such, the second extension portion 23 is used to conduct heat from the bottom end portion of the electrode assembly 12 to the housing 11, and then the heat is conducted from the housing 11 to the outside.

The battery 100 further includes a liquid cooling plate 30, where a bottom end portion of each battery cell 10 is placed on the liquid cooling plate 30. Optionally, a top end portion is opposite to the bottom end portion of the battery cell 10, and the stacking direction of the electrode assemblies 12 in the battery cell 10 is the same as a direction from the bottom end portion to the top end portion, that is, the expansion direction of each electrode assembly 12 is the same as the direction from the bottom end portion to the top end portion. As such, the working-generated heat can be quickly transferred from the battery cell 10 to the liquid cooling plate 30.

According to a second aspect, an embodiment of the present application further provides an electrical device, including the foregoing battery 100.

The electrical device 1000 may be any one of the above devices or energy storage systems using the battery 100.

The above are only the preferred embodiments of the present application and are not intended to limit the present application. Any modifications, equivalent replacements, improvements, etc. made within the spirit and principles of the present application shall be included in the scope of protection of the present application.

## Claims

1. A battery, comprising: a plurality of battery cells arranged in at least one column and a support member provided in each battery cell, wherein among the battery cells in a current column, a thermal conductivity of the support member in the battery cell at a middle position is greater than a thermal conductivity of the support member in the battery cell at an outer position.

2. The battery according to claim 1, wherein the battery cell comprises a housing and a plurality of electrode assemblies provided in the housing, and the support member is provided between two adjacent electrode assemblies; and/or the support member is provided between the electrode assembly and an inner wall of the housing.

3. The battery according to claim 2, wherein each electrode assembly is arranged in an expansion direction thereof, and the support member is provided between any two adjacent electrode assemblies; and/or the support member is provided between the electrode assembly and the inner wall of the housing corresponding to the expansion direction of the electrode assembly.

4. The battery according to claim 2 or 3, wherein the support member comprises a first body portion provided between large-surface end faces of the two adjacent electrode assemblies;
alternatively, the support member comprises a first body portion provided between the large-surface end face of the electrode assembly and the inner wall of the housing.

5. The battery according to claim 4, wherein the support member further comprises a first extension portion formed by one end of the first body portion extending outward, the first extension portion being used for contact with a top end portion of the electrode assembly.

6. The battery according to claim 4 or 5, wherein the support member further comprises a second extension portion formed by another end of the first body portion extending outward, the second extension portion being used for contact with a bottom end portion of the electrode assembly.

7. The battery according to any one of claims 1 to 6, wherein among the battery cells in the current column, in a direction from the battery cell at the middle position to the battery cell at the outer position, the thermal conductivities of the support members in the battery cells present a linear progressive decrease.

8. The battery according to any one of claims 1 to 6, wherein among the battery cells in the current column, in a direction from the battery cell at the middle position to the battery cell at the outer position, the thermal conductivities of the support members in the battery cells present a nonlinear progressive decrease.

9. The battery according to any one of claims 1 to 6, wherein among the battery cells in the current column, the ratio of the thermal conductivity of the support member in the battery cell at the middle position to the thermal conductivity of the support member in the battery cell at an outermost position is greater than or equal to 2.

10. The battery according to any one of claims 2 to 9, wherein the support member is elastic.

11. The battery according to any one of claims 1 to 10, wherein the support members are made of the same material, and among the battery cells in the current column, a thickness of the support member in the battery cell at the middle position is less than a thickness of the support member in the battery cell at the outer position.

12. The battery according to any one of claims 1 to 10, wherein the support members are made of the same material, and among the battery cells in the current column, a contact area of the support member in the battery cell at the middle position is greater than a contact area of the support member in the battery cell at the outer position.

13. The battery according to any one of claims 1 to 10, wherein the support members are made of the same material, and among the battery cells in the current column, a porosity of the support member in the battery cell at the middle position is greater than a porosity of the support member in the battery cell at the outer position.

14. The battery according to claim 13, wherein under the condition of the same porosity, in the direction from the battery cell at the middle position to the battery cell at the outer position, pore diameters of the support members in the battery cells present a progressively decreasing trend.

15. The battery according to any one of claims 1 to 14, further comprising a liquid cooling plate, wherein a bottom end portion of each battery cell is placed on the liquid cooling plate.

16. An electrical device, comprising the battery according to any one of claims 1 to 15.
